# EUROPÄISCHE PATENTSCHRIFT

(11) **EP 1 813 466 B1**
(45) Veröffentlichungstag und Bekanntmachung des Hinweises auf die Patenterteilung: **22.07.2009**
(21) Anmeldenummer: 07000307.4
(22) Anmeldetag: 09.01.2007
(51) Int. Cl.: B60N 2/22, B60N 2/225, B60N 2/44, F16H 1/32

(54) **Gelenkbeschlag**
Joint fitting
Système d'articulation

(30) Priorität: 17.01.2006 DE 102006002139
(43) Veröffentlichungstag der Anmeldung: 01.08.2007
(73) Patentinhaber: Voss, Hans Werner, 67806 Rockenhausen (DE)
(72) Erfinder: Voss, Hans Werner, 67806 Rockenhausen (DE)

(56) Entgegenhaltungen:
- DE-A1- 2 509 074
- DE-A1- 2 916 220
- DE-A1- 3 811 074
- FR-A- 2 424 584
- GB-A- 1 462 850
- IT-B- 1 160 887

## Beschreibung

Die Erfindung bezieht sich auf einen Gelenkbeschlag für zwei um eine Achse relativ zueinander verschwenkbare Bauteile eines Fahrzeugsitzes, wobei an dem einen schwenkbaren Bauteil ein erstes Zahnrad und an dem zweiten schwenkbaren Bauteil ein zweites Zahnrad fest angeordnet ist, die beide axial ausgerichtete Verzahnungen besitzen und wobei das erste Zahnrad mit dem eine Zahndifferenz gegenüber dem ersten Zahnrad aufweisenden zweiten Zahnrad mittels eines drehbar antreibbaren Wälzantriebs wirkverbindbar ist, durch den durch Abwälzung das erste Bauteil relativ zum zweiten Bauteil verschwenkbar ist, wobei das erste Zahnrad und das zweite Zahnrad mit einander zugewandter Verzahnung ausgebildet und koaxial zur Achse zueinander einen Abstand zwischen sich bildend angeordnet sind, wobei in diesem Abstand zwischen den Zahnrädern ebenfalls koaxial zur Achse ein Sperrad angeordnet ist, das beidseitig jeweils eine axiale Verzahnung mit zueinander versetzter Teilung besitzt, wobei das Sperrad von dem um die Achse drehbar antreibbaren Wälzantrieb umlaufend abwälzend jeweils diametral gegenüberliegend mit einer Seite in die Verzahnung des ersten Zahnrads und mit der anderen Seite in die Verzahnung des zweiten Zahnrads insbesondere spielfrei eingreifend beaufschlagbar ist und wobei die Zahndifferenz der Verzahnung des ersten Zahnrads gegenüber der ihr zugeordneten Verzahnung des Sperrads ungleich der Zahndifferenz der Verzahnung des zweiten Zahnrads gegenüber der ihm zugeordneten Verzahnung des Sperrads ist.

Bei einem derartigen Gelenkbeschlag ist es bekannt, daß das erste Zahnrad konzentrisch in dem zweiten Zahnrad liegt und die unterschiedliche Zähnezahl aufweisenden Verzahnungen von erstem und zweitem Zahnrad axial in dieselbe Richtung zeigen.

Koaxial zu dem ersten und zweiten Zahnrad ist ein Zahnring ringsum kippbar angeordnet, der mit seiner axial ausgerichteten Verzahnung, die gleiche Zähnezahl wie das zweite Zahnrad besitzt und in die Verzahnungen sowohl von erstem und zweitem Zahnrad eingreift. Durch die gegenüber der Zähnezahl des ersten Zahnrades unterschiedliche Zähnezahl des Zahnrings greift dieser nur in einer Teileingriffszone mit seiner Verzahnung in die Verzahnungen von erstem und zweitem Zahnrad ein. Durch einen Wälzantrieb ist der Zahnring axial in Eingriff in das erste und das zweite Zahnrad beaufschlagt. Durch Drehen des Wälzantriebs wandert die Teileingriffszone längs den Umfängen des ersten und des zweiten Zahnrads, wodurch sich eine Relatiwerdrehung der beiden Zahnräder zueinander ergibt.

Aus der DE 29 16 220 A ist ein Gelenkbeschlag der eingangs genannten Art bekannt. Dabei ist das Sperrad geneigt auf der Achse angeordnet und besteht aus einem fest mit der Achse verbundenen inneren Ring, an dem über ein Lager ein äußerer Ring angeordnet ist, der die beidseitige Verzahnung aufweist.

Aus der DE 38 11 074 A und der FR 2 424 584 A ist ein Gelenkbeschlag bekannt, der teilweise dem Gelenkbeschlag der eingangs genannten Art entspricht. Dabei greift das eine taumelbare Zahnrad mit einem Bereich seiner axialen Verzahnung in die gegenüberliegende axiale Verzahnung des anderen radial fest ausgerichteten Zahnrads ein. Bei einem Taumelantrieb des taumelbaren Zahnrads wälzt dieses in dem anderen Zahnrad ab und treibt es zu einer Drehbewegung an.

Aus der GB 1 462 850 ist eine Einrichtung zum Ändern der Drehzahl und/oder der Drehrichtung bekannt; die koaxial zueinander zwei Zahnräder mit axial einander zugewandter Verzahnung aufweisen, wobei zwischen den beiden Zahnrädern ein drehbar antreibbares Taumelrad angeordnet ist. Das gegenüber der Drehachse der Zahnräder geneigte Taumelrad ist beidseitig mit axialen Verzahnungen ausgebildet, die zueinander diametral jeweils in die ihnen gegenüberliegenden Verzahnungen der Zahnräder eingreifen.

Aufgabe der Erfindung ist es einen Gelenkbeschlag der eingangs genannten Art zu schaffen, der bei einfachem und bauraumsparendem Aufbau hochbelastbar ist und einen einwandfreien Lauf der Zahnräder ineinander ermöglicht.

Diese Aufgabe wird erfindungsgemäß dadurch gelöst, daß das Sperrad von dem radial umlaufenden Wälzantrieb in eine zur Achse geneigte, mit seinen Verzahnungen in das erste und zweite Zahnrad eingreifende Lage axial auslenkbar ist wobei der Wälzantrieb eine zur Achse koaxiale, drehbar antreibbare Antriebswelle aufweist, die zwei einander diametral gegenüberliegende, radial gerichtete Mitnehmerarme aufweist, die axial an dem Sperrad anliegen und durch die das Sperrad axial auslenkbar beaufschlagbar ist.

Die axial ausgerichtete Verzahnung führt bei einem sauberen Abwälzen der Zähne dazu, daß die Zähne in radialer Richtung sehr breit ausgebildet werden können, so daß eine hohe Belastung durch Verteilung auf einen großen Querschnitt übertragen werden kann. Die Baugröße kann trotzdem gering gehalten werden.

Der die Taumelbewegung erzeugende Wälzantrieb und damit der Gelenkbeschlag besitzt eine geringe axiale Baugröße.

Vorzugsweise ist der Zahnwinkel der Zähne etwas größer als der Winkel des Reibwertes der verwendeten Materialpaarung der Zahnräder. Da dieser Winkel bei etwa 6-7° liegt, ist es von Vorteil, wenn der Zahnwinkel der Zähne bei etwa 9° liegt. Dies führt dazu, daß die bei Belastung auf die Zahnräder einwirkenden axialen Kräfte in einem moderaten Größenbereich liegen.

Bei einem Drehen des Wälzantriebes kommt es zu einem umlaufenden Taumeln des Sperrades in Bezug auf die Achse, so daß das Abwälzen der Verzahnung des Sperrades in den Verzahnungen des ersten und des zweiten Zahnrades zu einer Relatiwerdrehung der Zahnräder zueinander und damit auch zu einem Relatiwerschwenken der verschwenkbaren Bauteile zueinander führt.

Der Gelenkbeschlag kann für Sitze mit verstellbarer Lehne z.B. in Fahrzeugen wie Kraftfahrzeugen aber auch bei Flugzeugen verwandt werden.

Es können an derartigen Sitzen auch Einstellungen wie z.B. Höhen-, Neigungs- und Lordoseneinstellungen erfolgen.

Die beidseitigen Verzahnungen des Sperrades besitzen vorzugsweise gleiche Zähnezahl und sind um eine halbe Teilung zueinander versetzt.

Sind die Zahnüberdeckungen der einander gegenüberliegenden Verzahnungen von Sperrad und erstem Zahnrad und/oder der einander gegenüberliegenden Verzahnungen von Sperrad und zweitem Zahnrad >1, so führt dies zu einem besonders sauberen Abwälzen der Zähne der beiden Zahnräder aufeinander.

Das erste Zahnrad oder das zweite Zahnrad kann eine Zahndifferenz von "0" gegenüber dem Sperrad aufweisen.

Dies bedeutet, daß sich das Sperrad in dem Zahnrad, gegenüber dem es eine Zahndifferenz von "0" aufweist, nur abwälzt, aber keinen Vortrieb bewirkt.

Weist das zweite Zahnrad oder das erste Zahnrad eine Zahndifierenz von "1" oder von ">1" gegenüber dem Sperrad auf, so erfolgt zwischen dem Zahnrad, das eine Zahndifferenz von 1 oder >1 gegenüber dem Sperrad aufweist, ein Vortrieb.

Das Sperrad kann mit einer Koaxialbohrung frei drehbar auf einem zur Achse koaxialen Zapfen gelagert sein, wobei das Sperrad gegenüber der Achse taumelbar auslenkbar ist oder das Sperrad elastisch verformbar auslenkbar ist.

Um einen zumindest nahezu vollständigen Eingriff der ineinandergreifenden Zähne von Sperrad und erstem sowie zweiten Zahnrad über die ganze radiale Zahnlänge zu ermöglichen, sind die Verzahnungen des ersten Zahnrads und/oder des zweiten Zahnrads entsprechend der Neigungsauslenkung des Sperrads zur Achse geneigt ausgebildet.

Damit wird eine hohe Belastungsfähigkeit der Zähne erreicht.

Eine geringe axiale Baugröße wird erreicht, wenn die Mitnehmerarme im Bereich der Antriebswelle axial um die Breite des Sperrads versetzt angeordnet sind, der axiale Abstand zwischen den radial äußeren Enden der Mitnehmerarme geringer ist als die Breite des Sperrades und das Sperrad zwischen den Mitnehmerarmen mit seiner Koaxialbohrung auf der Antriebswelle angeordnet ist.

Um ein geschmeidiges Eingreifen der Zähne ineinander zu erreichen, können die Mitnehmerarme axial elastisch biegbar sein.

Anstatt dessen oder auch zusätzlich können die Mitnehmerarme insbesondere in ihrem radial äußeren Bereich axial federnd verformbar sein.

Zu einer einfachen Montierbarkeit bei Verwendung gleicher Bauteile führt es, wenn die Antriebswelle aus zwei identischen, jeweils einen Mitnehmerarm aufweisenden Halbwellen besteht, die an ihrer Trennungsebene aneinanderliegen, wobei die Mitnehmerarme zueinander axial versetzt sind.

Um eine falsche Montage der Halbwellen zu verhindern, können die Halbwellen insbesondere durchgehende Axialausnehmungen besitzen, die zur Trennungsebene hin offen sind und bei zur Antriebswelle zusammengesetzten Halbwellen einen formcodierten Gesamtquerschnitt bilden.

Dabei kann in dem formcodierten Gesamtquerschnitt ein drehbar antreibbarer Stellzapfen gleichen Querschnitts einführbar sein, über den der Drehantrieb der Antriebswelle erfolgt.

Dieser Drehantrieb kann sowohl manuell als auch motorisch, insbesondere elektromotorisch erfolgen.

Eine schützende Kammerung des Bereichs des Sperrrades und der Verzahnungen der beiden Zahnräder erfolgt auf einfache Weise ohne zusätzliche Bauteile dadurch, daß das erste Zahnrad und das zweite Zahnrad mit ihren radial außerhalb des Sperrrads befindlichen, einander zugewandten axial gerichteten Ringbereichen aneinander in Anlage sind.

Zur Führung der beiden relativ zueinander verdrehbaren Zahnräder kann der axial gerichtete Ringbereich des einen Zahnrads eine konzentrisch umlaufende, zum anderen Zahnrad hin offene Ringnut aufweisen, in die ein oder mehrere axial hervorstehende Ansätze entsprechender radialer Breite des anderen Zahnrads eingreifen.

Vorzugsweise ist das erste Zahnrad und/oder das Zweite Zahnrad durch ein Sicherungselement gegen axiales Abheben von dem zweiten Zahnrad und/oder dem ersten Zahnrad gesichert.

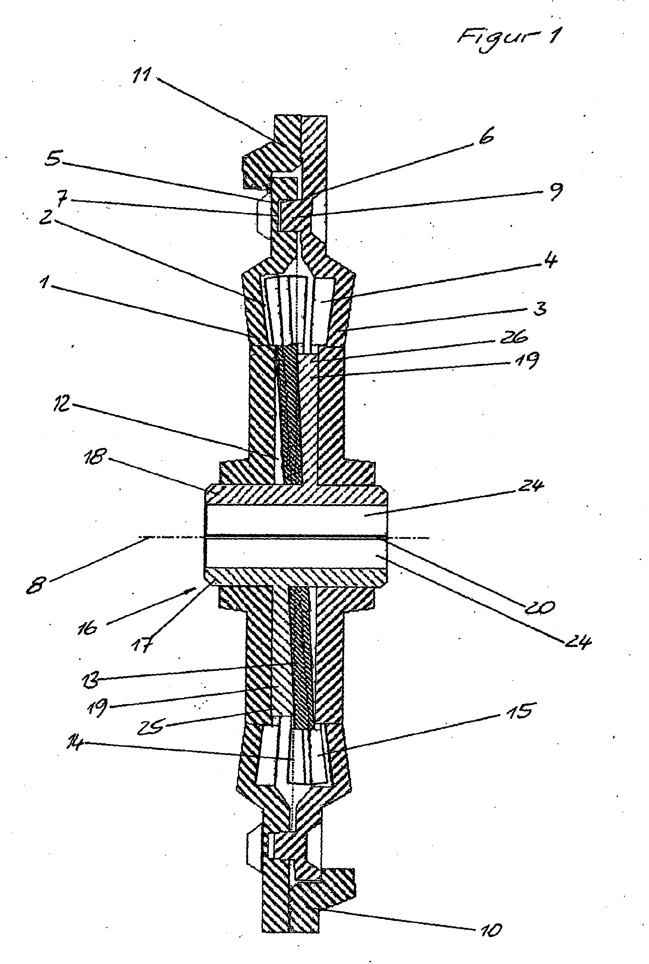

Ausführungsbeispiele der Erfindung sind in der Zeichnung dargestellt und werden im folgenden näher beschrieben. Es zeigen
- Figur 1: einen Querschnitt eines ersten Ausführungsbeispiels eines Gelenkbeschlags

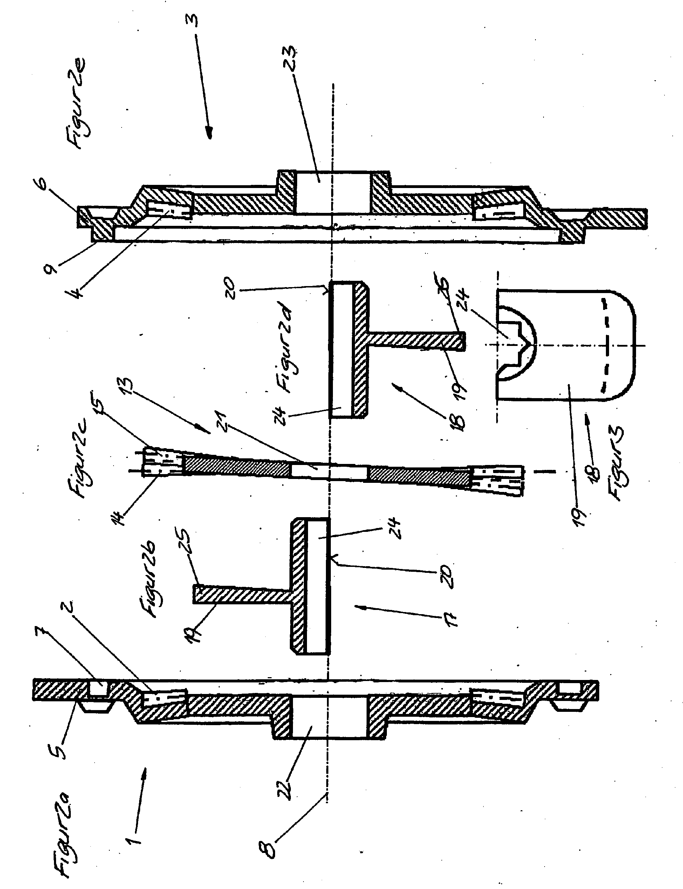

- Figuren 2a bis 2e: eine Explosionsdarstellung im Querschnitt des Gelenkbeschlags nach Figur 1
- Figur 3: eine Seitenansicht einer Halbwelle mit Mitnehmerarm des Gelenkbeschlags nach Figur 1
- Figur 4: eine Seitensicht einer Antriebswelle mit Mitnehmerarmen eines zweiten Ausführungsbeispiels eines Gelenkbeschlags
- Figur 5: einen Querschnitt der Antriebswelle nach Figur 1 mit einem Sperrrad
- Figur 6: einen vergrößerten Ausschnitt "A" der Halbwelle des Gelenkbeschlags nach Figur 4
- Figur 7: eine Draufsicht der Antriebswelle nach Figur 4
- Figur 8: eine Draufsicht auf einen Ausschnitt der Verzahnung von erstem Zahnrad und der dem ersten Zahnrad zugewandten Verzahnung des Sperrrades des Gelenkbeschlags nach Figur 1.

Die in den Figuren dargestellten Gelenkbeschläge weisen ein erstes Zahnrad 1 mit einer axial ausgerichteten Verzahnung 2 und ein zweites Zahnrad 3 mit einer axial ausgerichteten Verzahnung 4 auf, wobei die beiden Verzahnungen 2 und 4 axial einander gegenüberliegen und einander zugewandt sowie vorzugsweise als Kegelradverzahnung ausgebildet sind. Der Zahnwinkel "α" der Verzahnungen ist 18°. Die beiden Zahnräder 1 und 3 sind um eine Achse 8 relativ zueinander verdrehbar. Dadurch ist ein nicht dargestelltes, mit dem ersten Zahnrad 1 fest verbundenes erstes verschwenkbares Bauteil relativ zu einem ebenfalls nicht dargestellten, fest mit dem zweiten Zahnrad 3 verbundenen zweiten Bauteil verschwenkbar.

Mit ihren radial außerhalb der Verzahnungen 2 und 4 befindlichen, einander zugewandten axial gerichteten Ringbereichen 5 und 6 liegen die Zahnräder 1 und 3 aneinander.

Dabei ist in dem Ringbereich 5 des ersten Zahnrades 1 eine zum Ringbereich 6 des zweiten Zahnrades 3 hin offene, zur Achse 8 konzentrische Ringnut 7 ausgebildet, in die ein axial hervorstehender Ringansatz 9 des zweiten Zahnrads 3 entsprechenden Querschnitts eingreift.

An dem ersten Zahnrad 1 ist ein Sicherungselement 10 lösbar befestigt, das den radial umlaufenden Rand des zweiten Zahnrades 3 umgreift.

Diametral dem Sicherungselement 10 gegenüberliegend ist an dem zweiten Zahnrad 3 ein entsprechendes Sicherungselement 11 lösbar befestigt, das den radial umlaufenden Rand des ersten Zahnrades 1 umgreift. Durch die Sicherungselemente 10 und 11 werden die Zahnräder 1 und 3 gegen axiales Abheben voneinander gesichert.

Von dem radial äußeren Bereich der Verzahnungen 2 und 4 aus besteht radial nach innen ein Abstand zwischen den beiden Zahnrädern 1 und 3, wodurch eine kreisscheibenartige Kammer 12 gebildet ist.

In dieser Kammer 12 ist koaxial zur Achse 8 ein Sperrrad 13 angeordnet, das beidseitig jeweils eine axiale vorzugsweise als Kegelradverzahnung ausgebildete Verzahnung 14 und 15 aufweist. Die Verzahnungen 14 und 15 besitzen gleiche Zähnezahl und sind um eine halbe Teilung zueinander versetzt ausgebildet. Sie sind um ein geringes Maß zu ihren radial äußeren Enden hin gegenüber der Achse 8 geneigt.

Dabei liegt die Verzahnung 14 der Sperrrades 13 der Verzahnung 2 des ersten Zahnrades 1 und die Verzahnung 15 des Sperrrades 13 der Verzahnung 4 des zweiten Zahnrades 3 koaxial gegenüber. Die Verzahnungen 14 und 15 des Sperrrades 13 sind in ihrer Geometrie so gestaltet, daß ein Eintauchen in die jeweils gegenüberliegende Verzahnung 2 bzw. 4 von erstem und zweitem Zahnrad 1 und 3 ermöglicht wird.

Die Verzahnung 4 des zweiten Zahnrads 3 weist gegenüber der ihr axial gegenüberliegenden Verzahnung 15 des Sperrrades 13 eine Zahndifferenz von "0" auf, während die Verzahnung 2 des ersten Zahnrades 1 eine Zahndifferenz gegenüber der ihr gegenüberliegenden Verzahnung 14 des Sperrrades 13 von "1" aufweist.

Zur Achse 8 koaxial ist eine Antriebswelle 16 angeordnet, die aus zwei identischen Halbwellen 17 und 18 besteht, die jeweils einen radial nach außen gerichteten Mitnehmerarm 19 besitzen, der über die Länge der Halbwellen 17 und 18 gesehen außermittig angeordnet ist.

Die beiden Halbwellen 17 und 18 liegen an ihrer Trennungslinie 20 aneinander an, wobei die Mitnehmerarme 19 zueinander axial versetzt sind.

Auf dem Außenumfang der Antriebswelle 16 ist in dem zwischen den Mitnehmerarmen 19 gebildeten axialen Zwischenraum das etwa gleiche Breite besitzende Sperrrad 13 mit seiner Koaxialbohrung 21 frei drehbar gelagert.

Die von den Mitnehmerarmen 19 axial wegragenden Bereiche der Antriebswelle 16 durchragen entsprechende koaxiale Lagerbohrungen 22 und 23 in dem ersten Zahnrad 1 und dem zweiten Zahnrad 3.

In den Halbwellen 17 und 18 sind zur Trennungsebene 20 hin offene, durchgehende Axialausnehmungen 24 ausgebildet, die bei zusammengesetzten Halbwellen 17 und 18 einen formcodierten Gesamtquerschnitt bilden.

In diesen Gesamtquerschnitt ist eine nicht dargestellte Welle entsprechenden Querschnitts eines Drehantriebs für die Antriebswelle 16 einsetzbar.

Durch die axial zueinander versetzten Mitnehmerarme 19 gleiten bei einem Drehantrieb der Antriebswelle 16 die Mitnehmerarme 19 auf einer Kreisbahn jeweils an einer Seitenfläche des Sperrrads 13 entlang.

Da der axiale Abstand der radial äußeren freien Enden 25 und 26 der Mitnehmerarme 19 geringer als die Breite des Sperrrades 13 ist, wird das Sperrrad 13 von den Mitnehmerarmen 19 in eine gegenüber der Achse 8 geneigte Kippstellung beaufschlagt. Durch diese Neigung tauchen mehrere Zähne der Verzahnungen 14 und 15 in jeweilig von einem Mitnehmerarm 19 beaufschlagten Bereich des Sperrrades 13 in die Verzahnungen 2 und 4 von erstem und zweitem Zahnrad 1 und 3 ein.

Durch das Umlaufen der zur Drehung angetriebenen Mitnehmerarme 19 erfolgt auch ein taumelndes Umlaufen der Neigung des Sperrrades 13. Dadurch wälzt sich das Sperrrad 13 in der Verzahnung 4 des zweiten Zahnrads 3 und bewirkt an dem ersten Zahnrad 1 einen Vortrieb.

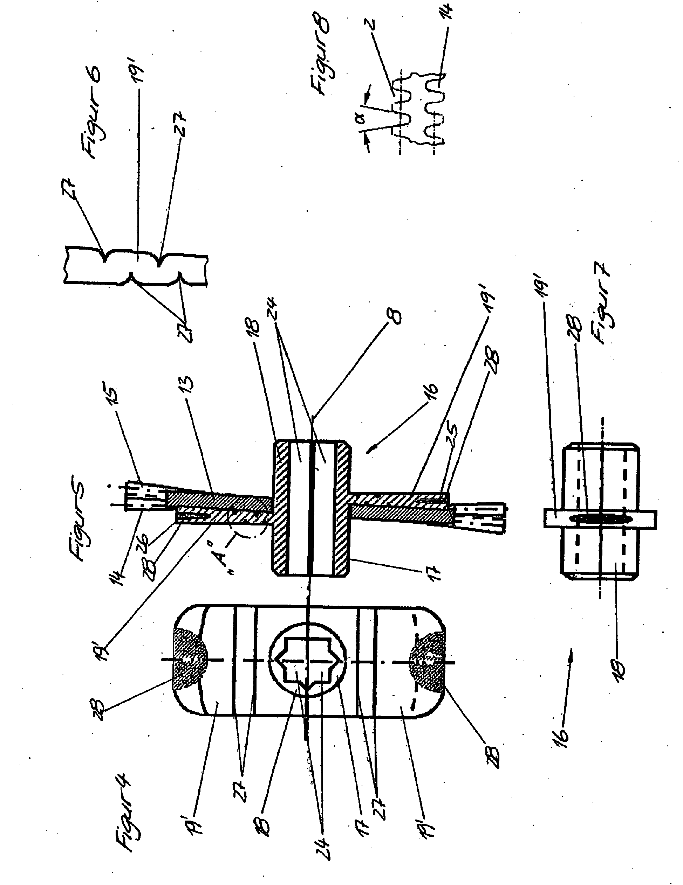

Wie bei dem Ausführungsbeispiel der Figuren 4 bis 7 zu sehen ist, weisen die Mitnehmerarme 19' axial beidseitig mehrere Schlitze 27 auf, so daß die Mitnehmerarme 19' elastisch axial biegbar sind.

Weiterhin besitzen die Mitnehmerarme 19' an ihren freien Endbereichen nach außen mündende radiale taschenartige Ausnehmungen 28. Dadurch sind die radial äußeren Bereiche der Mitnehmerarme 19' axial federnd verformbar.

Sowohl die Schlitze 27 als auch die Ausnehmungen 28 bewirken ein geschmeidiges Eingreifen der Zähne des Sperrrades 13 in die Verzahnungen 2 bzw. 4 von erstem und zweitem Zahnrad 1 und 3.

### Bezugszeichenliste

- 1: erstes Zahnrad
- 2: Verzahnung
- 3: zweites Zahnrad
- 4: Verzahnung
- 5: Ringbereich
- 6: Ringbereich
- 7: Ringnut
- 8: Achse
- 9: Ringansatz
- 10: Sicherungselement
- 11: Sicherungselement
- 12: Kammer
- 13: Sperrrad
- 14: Verzahnung
- 15: Verzahnung
- 16: Antriebswelle
- 17: Halbwelle
- 18: Halbwelle
- 19: Mitnehmerarm
- 19': Mitnehmerarm
- 20: Trennungsebene
- 21: Koaxialbohrung
- 22: Lagerbohrung
- 23: Lagerbohrung
- 24: Axialausnehmung
- 25: freies Ende
- 26: freies Ende
- 27: Schlitze
- 28: Ausnehmungen

## Patentansprüche

1. Gelenkbeschlag für zwei um eine Achse (8) relativ zueinander verschwenkbare Bauteile eines Fahrzeugsitzes, wobei an dem einen schwenkbaren Bauteil ein erstes Zahnrad (1) und an dem zweiten schwenkbaren Bauteil ein zweites Zahnrad (3) fest angeordnet ist, die beide axial ausgerichtete Verzahnungen (2,4) besitzen und wobei das erste Zahnrad mit dem eine Zahndifferenz gegenüber dem ersten Zahnrad aufweisenden zweiten Zahnrad mittels eines drehbar antreibbaren Wälzantriebs wirkverbindbar ist, durch den durch Abwälzung das erste Bauteil relativ zum zweiten Bauteil verschwenkbar ist, wobei das erste Zahnrad und das zweite Zahnrad mit einander zugewandter Verzahnung ausgebildet und koaxial zur Achse zueinander einen Abstand zwischen sich bildend angeordnet sind, wobei in diesem Abstand zwischen den Zahnrädern ebenfalls koaxial zur Achse ein Sperrad (13) angeordnet ist, das beidseitig jeweils eine axiale Verzahnung (14, 15) mit zueinander versetzter Teilung besitzt, wobei das Sperrad von dem um die Achse drehbar antreibbaren Wälzantrieb umlaufend abwälzend jeweils diametral gegenüberliegend mit einer Seite in die Verzahnung des ersten Zahnrads und mit der anderen Seite in die Verzahnung des zweiten Zahnrads insbesondere spielfrei eingreifend beaufschlagbar ist und wobei die Zahndifferenz der Verzahnung des ersten Zahnrads gegenüber der ihr zugeordneten Verzahnung des Sperrads ungleich der Zahndifferenz der Verzahnung des zweiten Zahnrads gegenüber der ihm zugeordneten Verzahnung des Sperrads ist, **dadurch gekennzeichnet, daß** das Sperrad (13) von dem radial umlaufenden Wälzantrieb in eine zur Achse (8) geneigte, mit seinen Verzahnungen (14, 15) in das erste und zweite Zahnrad (1, 3) eingreifende Lage axial auslenkbar ist wobei der Wälzantrieb eine zur Achse (8) koaxiale, drehbar antreibbare Antriebswelle (16) aufweist, die zwei einander diametral gegenüberliegende, radial gerichtete Mitnehmerarme (19, 19') aufweist, die axial an dem Sperrad (13) anliegen und durch die das Sperrrad (13) axial auslenkbar beaufschlagbar ist.

2. Gelenkbeschlag nach Anspruch 1, **dadurch gekennzeichnet, daß** die beidseitigen Verzahnungen (14, 15) des Sperrads (13) gleiche Zähnezahl besitzen.

3. Gelenkbeschlag nach einem der vorhergehenden Ansprüchen, **dadurch gekennzeichnet, daß** die beidseitigen Verzahnungen (14, 15) des Sperrads (13) um eine halbe Teilung zueinander versetzt sind.

4. Gelenkbeschlag nach einem der vorhergehenden Ansprüche, **dadurch gekennzeichnet, daß** die Zahnüberdeckungen der einander gegenüberliegenden Verzahnungen von Sperrad (13) und erstem Zahnrad (1) und/oder der einander gegenüberliegenden Verzahnungen von Sperrad (13) und zweitem Zahnrad (3) >1 sind.

5. Gelenkbeschlag nach einem der vorhergehenden Ansprüche, **dadurch gekennzeichnet, daß** das erste Zahnrad oder das zweite Zahnrad (3) eine Zahndifferenz von "0" gegenüber dem Sperrad (13) aufweist.

6. Gelenkbeschlag nach einem der vorhergehenden Ansprüche, **dadurch gekennzeichnet, daß** das zweite Zahnrad oder das erste Zahnrad (1) eine Zahndifferenz von "1" oder von ">1" gegenüber dem Sperrad (13) aufweist.

7. Gelenkbeschlag nach einem der vorhergehenden Ansprüche, **dadurch gekennzeichnet, daß** das Sperrad (13) mit einer Koaxialbohrung (21) frei drehbar auf einem zur Achse (8) koaxialen Zapfen gelagert ist.

8. Gelenkbeschlag nach einem der vorhergehenden Ansprüche, **dadurch gekennzeichnet, daß** das Sperrad (13) gegenüber der Achse (8) taumelbar auslenkbar gelagert ist.

9. Gelenkbeschlag nach einem der Ansprüche 1 bis 7, **dadurch gekennzeichnet, daß** das Sperrad elastisch verformbar auslenkbar ist.

10. Gelenkbeschlag nach einem der vorhergehenden Ansprüche, **dadurch gekennzeichnet; daß** die Verzahnungen (2, 4) des ersten Zahnrads (1) und/oder des zweiten Zahnrads (3) entsprechend der Neigungsauslenkung des Sperrads (13) zur Achse (8) geneigt ausgebildet sind.

11. Gelenkbeschlag nach einem der vorhergehenden Ansprüche, **dadurch gekennzeichnet, daß** die Mitnehmerarme (19, 19') im Bereich der Antriebswelle (16) axial um die Breite des Sperrads (13) versetzt angeordnet sind, der axiale Abstand zwischen den radial äußeren Enden der Mitnehmerarme (19, 19') geringer als die Breite des Sperrades (13) ist und das Sperrad (13) zwischen den Mitnehmerarmen (19, 19') mit seiner Koaxialbohrung (21) auf der Antriebswelle (16) angeordnet ist.

12. Gelenkbeschlag nach einem der vorhergehenden Ansprüche, **dadurch gekennzeichnet, daß** die Mitnehmerarme (19') axial elastisch biegbar sind.

13. Gelenkbeschlag nach einem der vorhergehenden Ansprüche, **dadurch gekennzeichnet, daß** die Mitnehmerarme (19') insbesondere in ihrem radial äußeren Bereich axial federnd verformbar sind.

14. Gelenkbeschlag nach einem der vorhergehenden Ansprüche, **dadurch gekennzeichnet, daß** die Antriebswelle (16) aus zwei identischen, jeweils einen Mitnehmerarm (19, 19') aufweisenden Halbwellen (17, 18) besteht, die an ihrer Trennungsebene (20) aneinanderliegen, wobei die Mitnehmerarme (19, 19') zueinander axial versetzt sind.

15. Gelenkbeschlag nach Anspruch 14, **dadurch gekennzeichnet, daß** die Halbwellen (17, 18) insbesondere durchgehende Axialausnehmungen (24) besitzen, die zur Trennungsebene (20) hin offen sind und bei zur Antriebswelle (16) zusammengesetzten Halbwellen (17, 18) einen formcodierten Gesamtquerschnitt bilden.

16. Gelenkbeschlag nach einem der vorhergehenden Ansprüche, **dadurch gekennzeichnet, daß** das erste Zahnrad (1) und das zweite Zahnrad (3) mit ihren radial außerhalb des Sperrads (13) befindlichen, einander zugewandten axial gerichteten Ringbereichen (5, 6) aneinander in Anlage sind.

17. Gelenkbeschlag nach Anspruch 16, **dadurch gekennzeichnet, daß** der axial gerichtete Ringbereich (5) des einen Zahnrads (1) eine konzentrisch umlaufende, zum anderen Zahnrad (3) hin offene Ringnut (7) aufweist, in die ein oder mehrere axial hervorstehende Ansätze (9) entsprechender radialer Breite des anderen Zahnrads (3) eingreifen.

18. Gelenkbeschlag nach einem der Ansprüche 16 und 17, **dadurch gekennzeichnet, daß** das erste Zahnrad (1) und/oder das zweite Zahnrad (3) durch ein Sicherungselement (10, 11) gegen axiales Abheben von dem zweiten Zahnrad (3) und/oder dem ersten Zahnrad (1) gesichert ist.

## Claims

1. Joint fitting for two vehicle-seat components which can be pivoted relative to one another about an axis (8), wherein a first gearwheel (1) is fixed on the one pivotable component and a second gearwheel (3) is fixed on the second pivotable component, the two gearwheels having axially oriented toothing formations (2, 4), and wherein the first gearwheel can be operatively connected to the second gearwheel, which has a tooth difference in relation to the first gearwheel, by means of a rotatably drivable rolling drive, by means of which the first component can be pivoted, by way of rolling action, relative to the second component, wherein the first gearwheel and the second gearwheel are formed with toothing formations facing towards one another and are arranged coaxially in relation to the axis to form a spacing between them, wherein a ratchet wheel (13) is arranged in this spacing between the gearwheels, likewise coaxially in relation to the axis, and has, on either side, a respective axial toothing formation (14, 15), these two toothing formations having pitches which are offset in relation to one another, wherein the rolling drive, which can be driven in a rotatable manner about the axis, can cause the ratchet wheel, with revolving rolling action, to have one side engaging, in particular in a play-free manner, in the toothing formation of the first gearwheel and, at a location diametrically opposite this, to have the other side engaging, in particular in a play-free manner, in the toothing formation of the second gearwheel, and wherein the tooth difference of the toothing formation of the first gearwheel in relation to the associated toothing formation of the ratchet wheel is not equal to the tooth difference of the toothing formation of the second gearwheel in relation to the associated toothing formation of the ratchet wheel, **characterized in that** the ratchet wheel (13) can be deflected axially by the radially revolving rolling drive into a position in which it is inclined in relation to the axis (8) and has its toothing formations (14, 15) engaging in the first and second gearwheels (1, 3), wherein the rolling drive has a rotatably drivable drive shaft (16) which is coaxial in relation to the axis (8) and has two diametrically opposite, radially directed driver arms (19, 19') which butt axially against the ratchet wheel (13) and can cause the ratchet wheel (13) to be deflected axially.

2. Joint fitting according to Claim 1, **characterized in that** the toothing formations (14, 15) on either side of the ratchet wheel (13) have the same number of teeth.

3. Joint fitting according to one of the preceding claims, **characterized in that** the toothing formations (14, 15) on either side of the ratchet wheel (13) are offset in relation to one another by half a pitch.

4. Joint fitting according to one of the preceding claims, **characterized in that** the tooth overlaps of the mutually opposite toothing formations of the ratchet wheel (13) and first gearwheel (1) and/or of the mutually opposite toothing formations of the ratchet wheel (13) and second gearwheel (3) > 1.

5. Joint fitting according to one of the preceding claims, **characterized in that** the first gearwheel or the second gearwheel (3) has a tooth difference of "0" in relation to the ratchet wheel (13).

6. Joint fitting according to one of the preceding claims, **characterized in that** the second gearwheel or the first gearwheel (1) has a tooth difference of "1" or of "> 1" in relation to the ratchet wheel (13).

7. Joint fitting according to one of the preceding claims, **characterized in that** the ratchet wheel (13) is mounted in a freely rotatable manner, by way of a coaxial hole (21), on a stub which is coaxial in relation to the axis (8).

8. Joint fitting according to one of the preceding claims, **characterized in that** the ratchet wheel (13) is mounted such that it can be deflected with wobbling action in relation to the axis (8).

9. Joint fitting according to one of Claims 1 to 7, **characterized in that** the ratchet wheel can be deflected in an elastically deformable manner.

10. Joint fitting according to one of the preceding claims, **characterized in that** the toothing formations (2, 4) of the first gearwheel (1) and/or of the second gearwheel (3) are inclined in accordance with the inclination deflection of the ratchet wheel (13) in relation to the axis (8).

11. Joint fitting according to one of the preceding claims, **characterized in that** the driver arms (19, 19') are offset axially in the region of the drive shaft (16) by the width of the ratchet wheel (13), the axial spacing between the radially outer ends of the driver arms (19, 19') is smaller than the width of the ratchet wheel (13), and the ratchet wheel (13) is arranged between the driver arms (19, 19') with its coaxial hole (21) on the drive shaft (16).

12. Joint fitting according to one of the preceding claims, **characterized in that** the driver arms (19') can be flexed elastically in the axial direction.

13. Joint fitting according to one of the preceding claims, **characterized in that** the driver arms (19') are deformable in an axially resilient manner in particular in their radially outer region.

14. Joint fitting according to one of the preceding claims, **characterized in that** the drive shaft (16) comprises two identical half-shafts (17, 18) which each have a driver arm (19, 19') and butt against one another along their parting plane (20), the driver arms (19, 19') being offset axially in relation to one another.

15. Joint fitting according to Claim 14, **characterized in that** the half-shafts (17, 18) have in particular continuous axial recesses (24) which are open in the direction of the parting plane (20) and, when the half-shafts (17, 18) are assembled to form the drive shaft (16), form a complete form-coded cross section.

16. Joint fitting according to one of the preceding claims, **characterized in that** the first gearwheel (1) and the second gearwheel (3) have their axially directed ring regions (5, 6), which face towards one another and are located radially outside the ratchet wheel (13), butting against one another.

17. Joint fitting according to Claim 16, **characterized in that** the axially directed ring region (5) of the one gearwheel (1) has a concentrically encircling annular groove (7) which is open in the direction of the other gearwheel (3) and in which engage one or more axially projecting extensions (9) of corresponding radial width belonging to the other gearwheel (3).

18. Joint fitting according to either of Claims 16 and 17, **characterized in that** the first gearwheel (1) and/or the second gearwheel (3) are/is secured by a securing element (10, 11) against lifting off axially from the second gearwheel (3) and/or the first gearwheel (1).

## Revendications

1. Ferrure d'articulation pour deux composants d'un siège de véhicule pouvant pivoter l'un par rapport à l'autre autour d'un axe (8), une première roue dentée (1) étant disposée fixement sur l'un des composants pivotants et une deuxième roue dentée (3) étant disposée fixement sur le deuxième composant pivotant, et les deux roues dentées possédant des dentures (2, 4) orientées axialement, et la première roue dentée pouvant être connectée fonctionnellement à la deuxième roue dentée présentant une différence de dents par rapport à la première roue dentée au moyen d'un entraînement à rouleau pouvant être entraîné en rotation, lequel permet au premier composant de pivoter par roulement par rapport au deuxième composant, la première roue dentée et la deuxième roue dentée étant réalisées avec une denture tournée l'une vers l'autre et étant disposées coaxialement à l'axe en formant l'une par rapport à l'autre un espacement entre elles, une roue d'arrêt (13) étant disposée dans cet espacement entre les roues dentées, également de manière coaxiale à l'axe, et possédant de part et d'autre à chaque fois une denture axiale (14, 15) avec une division décalée mutuellement, la roue d'arrêt pouvant être sollicitée en roulant de manière continue par l'entraînement à rouleau pouvant être entraîné en rotation autour de l'axe à chaque fois en position diamétralement opposée, en venant en prise notamment sans jeu avec un côté dans la denture de la première roue dentée et avec l'autre côté dans la denture de la deuxième roue dentée, la différence de dents entre la denture de la première roue dentée et la denture associée de la roue d'arrêt étant différente de la différence de dents entre la denture de la deuxième roue dentée et la denture associée de la roue d'arrêt, **caractérisée en ce que** la roue d'arrêt (13) peut être déviée axialement par l'entraînement à rouleau entraîné en rotation radiale dans une position inclinée par rapport à l'axe (8), venant en prise avec ses dentures (14, 15) dans la première et la deuxième roue dentée (1, 3), l'entraînement à rouleau présentant un arbre d'entraînement (16) pouvant être entraîné en rotation, coaxial à l'axe (8), qui présente deux bras d'entraînement (19, 19') orientés radialement diamétralement opposés l'un à l'autre, qui s'appliquent axialement contre la roue d'arrêt (13) et qui permettent de solliciter la roue d'arrêt (13) de manière à la dévier axialement.

2. Ferrure d'articulation selon la revendication 1, **caractérisée en ce que** les dentures (14, 15) des deux côtés de la roue d'arrêt (13) possèdent le même nombre de dents.

3. Ferrure d'articulation selon l'une quelconque des revendications précédentes, **caractérisée en ce que** les dentures (14, 15) des deux côtés de la roue d'arrêt (13) sont décalées l'une de l'autre d'une demi-division.

4. Ferrure d'articulation selon l'une quelconque des revendications précédentes, **caractérisée en ce que** les recouvrements des dents des dentures opposées de la roue d'arrêt (13) et de la première roue dentée (1) et/ou des dentures opposées de la roue d'arrêt (13) et de la deuxième roue dentée (3) sont > 1.

5. Ferrure d'articulation selon l'une quelconque des revendications précédentes, **caractérisée en ce que** la première roue dentée ou la deuxième roue dentée (3) présente une différence de dents de "0" par rapport à la roue d'arrêt (13).

6. Ferrure d'articulation selon l'une quelconque des revendications précédentes, **caractérisée en ce que** la deuxième roue dentée ou la première roue dentée (1) présente une différence de dent de "1" ou de ">1" par rapport à la roue d'arrêt (13).

7. Ferrure d'articulation selon l'une quelconque des revendications précédentes, **caractérisée en ce que** la roue d'arrêt (13) est montée avec un alésage coaxial (21) de manière librement rotative sur un tourillon coaxial à l'axe (8).

8. Ferrure d'articulation selon l'une quelconque des revendications précédentes, **caractérisée en ce que** la roue d'arrêt (13) est montée de manière à pouvoir être déviée par nutation par rapport à l'axe (8).

9. Ferrure d'articulation selon l'une quelconque des revendications 1 à 7, **caractérisée en ce que** la roue d'arrêt peut être déviée de manière déformable élastiquement.

10. Ferrure d'articulation selon l'une quelconque des revendications précédentes, **caractérisée en ce que** les dentures (2, 4) de la première roue dentée (1) et/ou de la deuxième roue dentée (3) sont réalisées de manière inclinée par rapport à l'axe (8) de manière correspondant à la déviation de l'inclinaison de la roue d'arrêt (13).

11. Ferrure d'articulation selon l'une quelconque des revendications précédentes, **caractérisée en ce que** les bras d'entraînement (19, 19') sont disposés de manière décalée axialement de la largeur de la roue d'arrêt (13) dans la région de l'arbre d'entraînement (16), l'espacement axial entre les extrémités radialement extérieures des bras d'entraînement (19, 19') est inférieur à la largeur de la roue d'arrêt (13) et la roue d'arrêt (13) est disposée avec son alésage coaxial (21) sur l'arbre d'entraînement (16) entre les bras d'entraînement (19, 19').

12. Ferrure d'articulation selon l'une quelconque des revendications précédentes, **caractérisée en ce que** les bras d'entraînement (19') peuvent être fléchis élastiquement et axialement.

13. Ferrure d'articulation selon l'une quelconque des revendications précédentes, **caractérisée en ce que** les bras d'entraînement (19') peuvent être déformés de manière axialement élastique notamment dans leur région radialement extérieure.

14. Ferrure d'articulation selon l'une quelconque des revendications précédentes, **caractérisée en ce que** l'arbre d'entraînement (16) se compose de deux demi-arbres (17, 18) identiques, présentant chacun un bras d'entraînement (19, 19'), qui s'appliquent l'un contre l'autre au niveau de leur plan de séparation (20), les bras d'entraînement (19, 19') étant décalés axialement l'un par rapport à l'autre.

15. Ferrure d'articulation selon la revendication 14, **caractérisée en ce que** les demi-arbres (17, 18) possèdent des évidements axiaux (24) notamment continus, qui sont ouverts vers le plan de séparation (20) et qui, dans le cas de demi-arbres (17, 18) assemblés pour donner l'arbre d'entraînement (16), forment une section transversale totale à codage de forme.

16. Ferrure d'articulation selon l'une quelconque des revendications précédentes, **caractérisée en ce que** la première roue dentée (1) et la deuxième roue dentée (3) sont en appui l'une contre l'autre avec leurs régions annulaires (5, 6) orientées aixalement et tournées l'une vers l'autre, se trouvant radialement en dehors de la roue d'arrêt (13).

17. Ferrure d'articulation selon la revendication 16, **caractérisée en ce que** la région annulaire (5) orientée axialement d'une des roues dentées (1) présente une rainure annulaire (7) ouverte vers l'autre roue dentée (3) et s'étendant concentriquement sur la périphérie, dans laquelle viennent en prise un ou plusieurs inserts (9) saillant axialement de la largeur radiale correspondante de l'autre roue dentée (3).

18. Ferrure d'articulation selon l'une quelconque des revendications 16 et 17, **caractérisée en ce que** la première roue dentée (1) et/ou la deuxième roue dentée (3) sont fixées par un élément de fixation (10, 11) contre un soulèvement axial de la deuxième roue dentée (3) et/ou de la première roue dentée (1).
